Europäisches Patentamt

**European Patent Office**

**Office européen des brevets**

(19)

(11) Numéro de publication: **0 017 587**
**B1**

(12)

# FASCICULE DE BREVET EUROPEEN

(45) Date de publication du fascicule du brevet: **22.12.82**

(51) Int. Cl.³: **B 60 P 1/40**

(21) Numéro de dépôt: **80400442.2**

(22) Date de dépôt: **02.04.80**

(54) Dispositif de déversement d'enrobés.

(30) Priorité: **04.04.79 FR 7908879**

(43) Date de publication de la demande:
**15.10.80 Bulletin 80/21**

(45) Mention de la délivrance du brevet:
**22.12.82 Bulletin 82/51**

(84) Etats contractants désignés:
**AT BE CH DE GB IT LI LU NL SE**

(56) Documents cités:
**FR - A - 2 191 537**
**GB - A - 948 702**
**GB - A - 1 032 652**
**US - A - 3 211 308**
**US - A - 3 331 519**
**US - A - 3 547 292**
**US - A - 3 910 437**

(73) Titulaire: **Gartiser, Jean-Paul**
**13, route de Lutzelbourg**
**F-57370 Phalsbourg (FR)**

(72) Inventeur: **Gartiser, Jean-Paul**
**13, route de Lutzelbourg**
**F-57370 Phalsbourg (FR)**

(74) Mandataire: **Aubertin, François**
**Cabinet Bugnion Associes S.A.R.L. 4, rue de**
**Haguenau**
**F-67000 Strasbourg (FR)**

Courier Press, Leamington Spa, England.

Dispositif de déversement d'enrobés

L'invention concerne un dispositif de déversement d'enrobés depuis un camion à benne basculante pour la pose d'une revêtement lors de la confection d'aires de trottoir présentant un déversoir, composé d'une goulotte, d'une vis d'Archimède et d'une force motrice amovible accouplée à cette dernière, solidaire de la partie arrière de la benne basculante et en communication avec cette dernière, ce déversoir assurant, par un entraînement des enrobés perpendiculaire à l'avance du camion, un déversement latéral des enrobés selon une ligne continue parallèle à la bordure du trottoir.

Lors de la confection d'aires de trottoir, on pose, en général, un revêtement constitué d'enrobés. Ces enrobés sont amenés par l'intermédiaire de camions présentant une benne basculante latéralement. La paroi latérale est ouverte et tandis que le camion longe le bord du trottoir, les enrobés sont déversés.

Toutefois, ce procédé présente plusieurs inconvénients. D'une part, il est assez difficile de conférer au camion une avance uniforme et, de ce fait, la masse déversée d'enrobés n'est pas égale. D'autre part, cette masse est déversée à proximité du bord du trottoir.

De ce fait, il faut répartir manuellement cette masse d'enrobés sur la totalité de la surface de l'aire du trottoir, et, fréquemment la distance entre la masse d'enrobés et le bord externe du trottoir longeant les immeubles est relativement importante. Ainsi, il faut une main d'oeuvre nombreuse nécessitant un temps relativement long pour répandre correctement lesdits enrobés.

Or, on connaît un dispositif permettant une pose rapide des enrobés et comportant un caisson mobile présentant, d'une part, des moyens pour le compactage et la mise à niveau des matériaux choisis qui, nécessairement, doivent être répartis sur la longueur du trottoir à réaliser et, d'autre part, des moyens pour le déplacement et le guidage du caisson le long du trottoir coopérant avec des moyens réglables pour délimiter la largeur du revêtement.

Cependant, la rentabilité de ce dispositif est fonction de l'épandage des enrobés et, fréquemment, elle est ralentie par suite d'une main d'oeuvre déficiente.

Par ailleurs, on connaît, par le brevet US—A—3.331.519, un dispositif de déversement d'enrobés depuis un camion à benne basculante pour la pose d'un revêtement lors de la confection d'aires de trottoir présentant un déversoir, composé de goulottes, et d'une vis d'Archimède faisant saillie latéralement par rapport au bord longitudinal de la benne basculante situé du côté du trottoir ainsi que d'une force motrice amovilbe accouplée à la vis, solidaire de la partie arrière de la benne basculante et en communication avec cette dernière, ce déversoir assurant, par un entraînement des enrobés perpendiculaire à l'avance du camion, un déversement latéral des enrobés selon une ligne continue parallèle à la bordure du trottoir. Afin de ne pas gêner le camion durant ses manoeuvres et pour son fonctionnement routier, la goulotte est repliable de façon à venir se rabattre à l'arrière du camion.

Toutefois, ce convoyeur présente l'inconvénient résidant dans le fait que la zone de déversement est toujours à une distance constante du camion. Or, la largeur du trottoir est variable et il est nécessaire de rapprocher ou d'éloigner le camion de la bordure du trottoir. Cependant, en fonction de la largeur de la chaussée, il arrive qu'il n'est pas possible de modifier la position du camion par rapport à la bordure du trottoir.

La présente invention a pour but de remédier à ces inconvénients. L'invention, telle qu'elle est caractérisée dans les revendications, résout le problème consistant à creer un dispositif de déversement d'enrobés depuis un camion à benne basculante pour la pose d'un revêtement lors de la confection d'aires de trottoir dont la zone de déversement des enrobés peut être rapprochée ou éloignée par rapport au bord latéral du camion, au moyen d'une goulotte amovible et règlable de façon téléscopique.

Les avantages obtenus grâce à cette invention consistent essentiellement en ceci que l'épendage des enrobés sur toute la surface de l'aire de l'épandage est facilité quelle que soit la largeur du trottoir, tout en permettant d'éliminer les manoeuvres répétées pour le positionnement du camion par rapport à la bordure du trottoir et, ainsi, d'augmenter la rentabilité du dispositif de pose du revêtement. En effet, on élimine le temps perdu dû à des manoeuvres répétées du camion et on diminue la consommation d'énergie nécessaire aux mouvements de positionnement du camion.

L'invention est exposée ci-après plus en détail à l'aide de dessins représentant seulement un mode d'exécution.

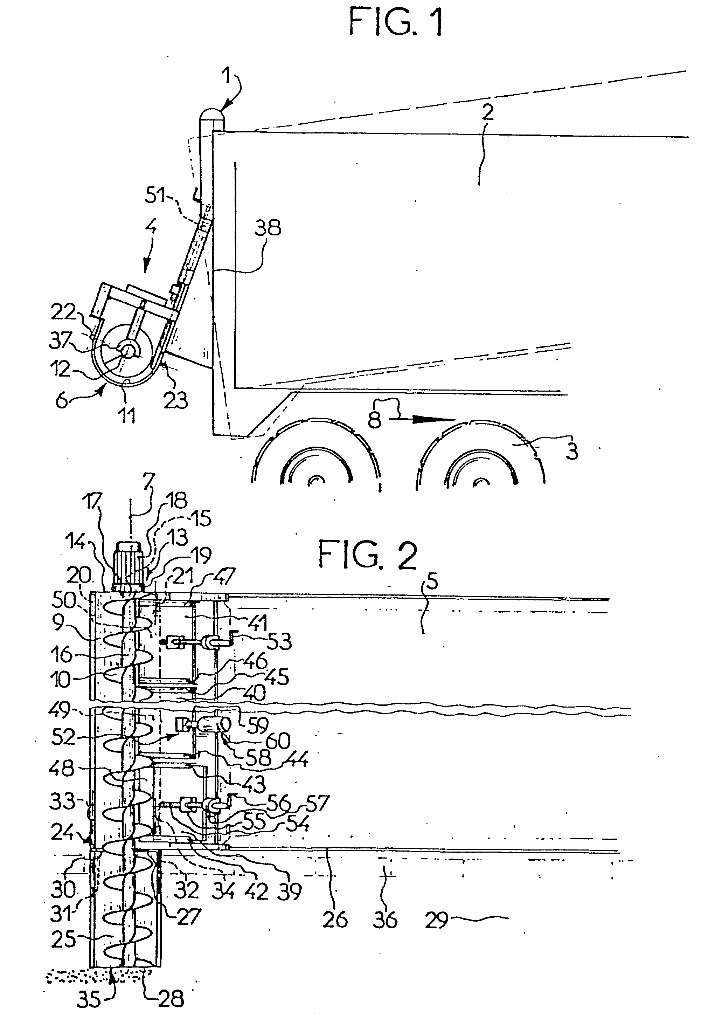

La figure 1 représente, en vue en élévation, la partie arrière d'une benne basculante montée sur un camion pourvue du dispositif de déversement d'enrobés conforme à l'invention.

La figure 2 représente une vue en plan de la figure 1.

On se réfère aux deux figures.

On pourvoit l'extrémité arrière 1 d'une benne basculante 2 montée sur un camion 3 d'un dispositif de déversement d'enrobés 4 stockés à l'intérieur 5 de ladite benne basculante 2.

Ce dispositif de déversement 4 comporte un déversoir 6 dont l'axe longitudinal 7 est perpendiculaire à l'avance 8 du camion 3. Ce déversoir 6 est constitué essentiellement d'une goulotte 9 dans laquelle tourne une vis d'Archimède 10. Le fond 11 de cette goulotte 9 est concentrique par rapport à l'axe 12 de la vis d'Archimède 10. La goulotte 9 présente à l'une de ses extrémités 13 une paroi verticale 14 dans laquelle est pratiqué un trou 15 pour le passage de l'arbre 16 de la vis d'Archimède 10. L'extrémité 17 de cet arbre 16 est accouplée à une force motrice 18, de préférence à vitesse de rotation variable.

Cette force motrice 18 est montée sur un support amovible 19 présentant deux axes longitudinaux 20, 21 engagés dans des fourreaux 22, 23 solidaires de la face externe de l'extrémité fermée de la goulotte 9.

L'autre extrémité 24 de la goulotte fixe 9 comporte un chant vertical ouvert 27 permettant le passage des enrobés depuis la goulotte 9 dans une goulotte amovible 25 dont le fond est également concentrique à la vis d'Archimède. La goulotte 9 a une longueur pratiquement identique à la largeur de la benne basculante 2. Ainsi, la goulotte amovible 25 dépasse le bord longitudinal 26 de la benne basculante 2 et son chant vertical ouvert 28 se trouve au-dessus de l'aire du trottoir 29. L'extrémité arrière 30 de la goulotte 25, c'est-à-dire celle dirigée vers la goulotte 9, comporte également deux axes 31, 32 s'engageant dans des fourreaux 33, 34 solidaires de la face externe de la goulotte 9 pour relier la goulotte amovible 25 à la goulotte fixe 9. Bien entendu, la longueur de la vis d'Archimède 10 correspond à la somme des longueurs de la goulotte 9 et de la goulotte 25.

Selon un mode de réalisation particulier, la goulotte amovible 25 est télescopique de sorte que la zone de déversement 35, formée par le chant vertical ouvert 28 de la goulotte amovible 25, peut être rapprochée ou éloignée de la bordure 36 du trottoir 29 en fonction de la largeur du trottoir. Le déversement latéral des enrobés se fait selon une ligne continue parallèle de la bordure 36.

Il est nécessaire que cette goulotte 25 ainsi que la force motrice 18 soient amovibles pour respecter un gabarit de largeur donnée pour éviter toute partie saillante par rapport à la largeur de la benne basculante 2 lors de la circulation normale du camion 3.

Ainsi, la force motrice 18, la goulotte amovible 25 et la vis d'Archimède 10 facilement découplables sont mises en place sur le chantier.

La vis d'Archimède 10 est maintenue par au moins un palier 37 solidaire de la goulotte 9. Latide goulotte 9 est en liaison avec le fond arrière 38 de la benne basculante 2 par l'intermédiaire de tiroirs 39, 40, 41 coulissant verticalement le long dudit fond 38 dans des glissières 42, 43; 44, 45 et 46, 47 solidaire du fond arrière 38. Ces tirroirs 39, 40, 41 permettent d'ouvrir plus ou moins des ouvertures 48, 49, 50 réalisées dans le fond arrière 38. Le coulissement des tiroirs 39, 40, 41 est obtenu par l'action de moyens de commande 51, 52, 53.

Selon un premier mode de réalisation, ces moyens de commande sont un axe fileté 54 le long duquel coulisse un écrou 55 solidaire du tiroir 39 actionné par une manivelle 56 et maintenu par un palier 57 solidaire du fond 38 de la benne basculante 2.

Selon un ature mode de réalisation, les moyens de commande sont un vérin 58 dont la tige 59 est solidaire du tiroir 40 et le cylindre 60 est solidaire du fond arrière 38 de la benne basculante 2.

Selon une variante, les tiroirs 48, 49, 50 peuvent être remplacés par un tiroir unique actionné par un ou plusieurs moyens de commande cités ci-dessus.

**Revendications**

1. Dispositif de déversement d'enrobés depuis un camion à benne basculante (2) pour la pose d'un revêtement lors de la confection d'aires de trottoir présentant un déversoir (6), coposé de goulottes (9), (25) et d'une vis d'Archimède (10) faisant saillie latéralement par rapport au bord longitudinal de la benne basculante situé du côté du trottoir (29) et d'une force motrice amovible (18) accouplée à la vis, solidaire de la partie arrière (1) de la benne basculante (2) et en communication avec cette dernière, ce déversoir assurant, par un entraînement des enrobés perpendiculaire à l'avance (8) du camion (3), un déversement latéral des enrobés selon une ligne continue parallèle à la bordure (39) du trottoir (29), caractérisé en ce que la goulotte saillante (25) est amovible et règlable de façon télescopique afin de rapprocher ou d'éloigner la zone (35) de déversement des enrobés de la bordure du trottoir (36) en fonction de la largeur du trottoir (29).

2. Dispositif selon la revendication 1, caractérisé en ce que la goulotte amovible (25) comporte, à son extrémité arrière (30) faisant face à l'extrémité ouverte (24) de la goulotte (9) solidaire du fond arrière (38) de la benne basculante (2), deux axes (31, 32) coopérant avec des fourreaux (33, 34) solidaires de l'extrémité ouverte (24) de la goulotte fixe (9) pour relier la goulotte amovible (25) à la goulotte fixe (9).

3. Dispositif selon la revendication 1, caractérisé en ce que la force motrice (18) comporte un support amovible (19) présentant deux axes longitudinaux (20, 21) engagés dans des fourreaux (22, 23) solidaires de la face externe de l'extrémité fermée (13) de la goulotte (9), cette extrémité (13) étant pourvue d'un trou (15) permettant le passage de l'arbre (16) de la vis d'Archimède (10) en vue de son accouplement avec la force motrice (18).

4. Dispositif selon la revendication 1, caractérisé en ce que les moyens de communication entre la benne basculante (2) et la goulottee fixe (9) sont au moins un tiroir (39, 40, 41) actionné verticalement par des moyens de commande obturant plus ou moins au moins une ouverture (48, 49, 50) pratiquée dans le fond arrière (38) de la benne basculante (2) et maintenu par des glissières (42 à 47) solidaires du fond arrière (38) de la benne basculante (2).

5. Dispositif selon les revendications 1 et 4, caractérisé en ce que les moyens de commande sont un axe fileté (54) le long duquel coulisse un écrou (55) solidaire du tiroir (39), une manivelle (56) pour actionner l'axe fileté (54) et un palier (57) traversé par l'axe fileté (54) solidaire du fond arrière (38) de la benne basculante (2).

6. Dispositif selon les revendications 1 et 4, caractérisé en ce que les moyens de commande sont un vérin (58) dont la tige (59) est solidaire du tiroir (40) et le cylindre (60) est solidaire du fond arrière (38) de la benne basculante (2).

### Claims

1. Device for the delivery of blacktop materials from a tiplorry (2) in order to lay a coating during the construction of areas of footpath, having an overflow (6) consisting of spouts (9, 25) and an Archimedean screw (10) laterally projecting with regard to the longitudinal edge of the tipping body situated toward the footpath (29) and a removable motive power (18) coupled to the screw, integral with the rear part (1) of the tipping body (2) and communicating with the latter, said overflow providing, by a carrying away of the blacktop materials perpendicular to the forward movement (8) of the lorry (3), a lateral delivery of the blacktop materials according to a continuous line parallel to the kerb (36) of the footpath (29), characterized in that the projecting spout (25) is removable and telescopically regulable in order to bring nearer or to move the delivery zone of the blacktop materials away from the kerb (36) of the footpath as a function of the width of said footpath (29).

2. Device according to claim 1, in which the removable spout (25) comprises, at the rear end (30) thereof facing the open end (24) of the spout (9) integral with the rear bottom (38) of the tipping body (2), two axis (31, 32) cooperating with some sleeves (33, 34) integral with the open end (24) of the fixed spout (9) for connecting the removable spout (25) with the fixed spout (9).

3. Device according to claim 1, in which the motive power (18) comprises a removable support (19) having two longitudinal axis (20, 21) introduced into some sleeves (22, 23) integral with the outer face of the closed end (13) of the spout (9), said end (13) being provided with a hole (15) allowing the passage of the shaft (16) of the Archimedean screw (10) with a view to the coupling thereof to the motive power (18).

4. Device according to claim 1, in which the communication means between the tipping body (2) and the fixed spout (9) comprise at least a drawer (39, 40, 41) vertically actuated by driving means obturating more or less an aperture (48, 49, 50) formed in the rear bottom (38) of the tipping body (2).

5. Device according to any one of the claims 1 and 4, in which the driving means are a threaded axis (54) along with slides a nut (55) integral with the drawer (39), a crank (56) for actuating the threaded axis (54) and a bearing (57) which goes across the threaded axis (54) integral with the rear bottom (38) of the tipping body (2).

6. Device according to any one of the claims 1 and 4, in which the driving means are a jack (58) the rod (59) of which is integral with the drawer (40) and the cylinder (60) is integral with the rear bottom (38) of the tipping body (2).

### Patentansprüche

1. Vorrichtung zur Abgabe von Schwarzdeckenmaterial von einem Lastwagen mit kippbarem Aufbau (2) für die Aufbringung eines Belags beim Bau von Bürgersteigen, umfassend eine Abgabeeinheit (6), bestehend aus Rutschen (9, 25) und einer Schnecke (10), die seitlich bezüglich des Längsrandes des kippbaren Aufbaus auf der Seite des Bürgersteiges (29) überstehen, sowie einer abnehmbaren Antriebseinheit (18), die an die Schnecke angekuppelt ist, die mit dem hinteren Teil (1) des kippbaren Aufbaus (2) verbunden ist und mit diesem letzteren in Verbindung steht, wobei diese Abgabeeinheit durch Fortbewegung des Schwarzdeckenmaterials senkrecht zu der Fahrtrichtung (8) des Lastwagens (3) eine seitliche Abgabe des Schwarzdeckenmaterials entsprechend einer kontinuierlichen, zu dem Rand (39) des Bürgersteiges (29) parallelen Linie bewirkt, dadurch gekennzeichnet, dass die überstehende Rutsche (25) abnehmbar und teleskopartig so einstellbar ist, dass die Zone (35) für die Abgabe des Schwarzdeckenmaterials entsprechend der Breite des Bürgersteiges (29) an den Bürgersteig-Rand (36) angenähert oder davon entfernt werden kann.

2. Vorrichtung gemäss Patentanspruch 1, dadurch gekennzeichnet, dass die abnehmbare Rutsche (25) an ihrem hinteren Ende (30), das dem offenen Ende (24) der Rutsche (9) gegenüberliegt, die mit der hinteren Wand (38) des kippbaren Aufbaus (2) fest verbunden ist, zwei Achsen (31, 32) umfasst, die mit Buchsen (33, 34) zusammenwirken, die mit dem offenen Ende (24) der festen Rutsche (9) fest verbunden sind, um die abnehmbare Rutsche (25) an der festen Rutsche (9) zu befestigen.

3. Vorrichtung gemäss Patentanspruch 1, dadurch gekennzeichnet, dass die Antriebseinheit (18) eine abnehmbare Halterung (19) umfasst, die zwei Längsachser (20, 21) aufweist, die in Buchsen (22, 23) eingreifen, die mit der Aussenseite des geschlossenen Endes (13) der Rutsche (9) fest verbunden sind, wobei dieses Ende (13) mit einer Bohrung (15) versehen ist, die die Durchführung der Welle (16) der Schnecke (10) zur Ankuppelung an die Antriebseinheit (18) gestattet.

4. Vorrichtung gemäss Patentanspruch 1, dadurch gekennzeichnet, dass die Mittel zur Verbindung zwischen dem kippbaren Aufbau (2) und der festen Rutsche (9) aus mindestens einem Schieber (39, 40, 41) bestehen, der durch Steuerungsmittel vertikal betätigt wird und eine Öffnung (48, 49, 50), die in der hinteren Wand (38) des kippbaren Aufbaus (2) angebracht ist, mehr oder weniger verschliesst, und von Führungsschienen (42 bis 47) gehalten wird, die mit der hinteren Wand (38) des kippbaren Aufbaus (2) fest verbunden sind.

5. Vorrichtung gemäss den Patentansprüchen 1 und 4, dadurch gekennzeichnet, dass die Steuerungsmittel aus einer Gewindeachse (54) bestehen, auf der einer Mutter (55) gleitet, die mit dem Schieber (39) fest verbunden ist, sowie aus einer Kurbel (56) zur Betätigung der Gewindeachse (54) und einem Lager (57), dass von der Gewindeachse (54) durchquert wird, und mit der hinteren Wand (38) des kippbaren Aufbaus fest verbunden ist.

6. Vorrichtung gemäss den Patentansprüchen 1 und 4, dadurch gekennzeichnet, dass die Steuerungsmittel aus einem Hubzylinder (58) bestehen, dessen Stange (59) mit dem Schieber (40) fest verbunden ist, und dessen Zylinder (60) mit der hinteren Wand (38) des kippbaren Aufbaus (2) fest verbunden ist.

# FIG. 1

# FIG. 2